# EUROPEAN PATENT APPLICATION

(11) **EP 4 246 388 A1**
(43) Date of publication of application: **20.09.2023**
(21) Application number: 22192359.2
(22) Date of filing: 26.08.2022
(51) Int. Cl.: G06Q 10/00, G06Q 10/08, G06Q 10/087, G06Q 10/0875

(54) **INFORMATION PROCESSING DEVICE, INFORMATION PROCESSING METHOD, COMPUTER-READABLE MEDIUM, AND INFORMATION PROCESSING SYSTEM**

(30) Priority: 16.03.2022 JP 2022041774
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: Aisu, Hideyuki, Tokyo, 105-0023 (JP); Sakakibara, Shizu, Tokyo, 105-0023 (JP); Kiribuchi, Daiki, Tokyo, 105-0023 (JP); Yoshida, Takufumi, Tokyo, 105-0023 (JP)
(74) Representative: Hoffmann Eitle

(57) **Abstract**

According to an arrangement, an information processing device (100) includes a reception unit (101) and a determination unit (105). The reception unit (101) receives a plurality of pieces of rack data including first identification information of one or more kinds of products to be housed in a plurality of racks, and a plurality of pieces of order data including second identification information of one or more kinds of products to be picked from at least part of the plurality of racks. The determination unit (105), based on the rack data, determines a processing sequence of the plurality of pieces of order data such that a ratio of picking products assigned to pieces of the order data from a single rack is increased. The plurality of racks are able to be moved to a work station where housing containers corresponding to at least part of the plurality of pieces of order data are disposed.

## Description

### FIELD

The present disclosure relates to an information processing device, an information processing method, a computer-readable medium, and an information processing system.

### BACKGROUND

A logistics system using a rack transfer warehouse is known, in which racks (racks housing products) that can be moved by an automated guided vehicle (AGV) or a worker are moved to a work station (picking station) where picking work of the products is performed.

As for such rack transfer systems, it is assumed in many cases that each order is added sequentially in real time. In other words, it is not usually anticipated that a large number of orders that can be changed in the processing sequence thereof are given to the system at a same timing.

### BRIEF DESCRIPTION OF THE DRAWINGS

FIG. 1 is a diagram illustrating an overview of a configuration of an information processing system according to an arrangement;
FIG. 2 is a block diagram of an information processing device according to the present arrangement;
FIG. 3 is a diagram illustrating an example of priority calculation;
FIG. 4 is a diagram illustrating an example of priority calculation;
FIG. 5 is a diagram illustrating an example of an index to be generated;
FIG. 6 is a diagram illustrating an example of hierarchical clusters to be generated;
FIG. 7 is a diagram illustrating an example of orders rearranged according to a processing sequence;
FIG. 8 is a flowchart illustrating sequence determination processing according to the present arrangement; and
FIG. 9 is a hardware configuration diagram of the information processing device according to the present arrangement.

### DETAILED DESCRIPTION

According to an arrangement, an information processing device includes a reception unit and a determination unit. The reception unit receives a plurality of pieces of rack data including first identification information of one or more kinds of products to be housed in a plurality of racks, and a plurality of pieces of order data including second identification information of one or more kinds of products to be picked from at least part of the plurality of racks. The determination unit, based on the rack data, determines a processing sequence of the plurality of pieces of order data such that a ratio of picking products assigned to pieces of the order data from a single rack is increased. The plurality of racks are able to be moved to a work station where housing containers corresponding to at least part of the plurality of pieces of order data are disposed.

With reference to the accompanying drawings, a preferable arrangement of an information processing device according to an arrangement will be described in detail hereinafter. The present arrangement can be applied to a logistics system using a rack transfer warehouse, for example.

As described above, in a conventional rack transfer system, orders are selected as picking targets sequentially as they are generated.

In the meantime, in a logistics system mainly targeted at Business to Business (B2B), for example, all orders to be processed within a certain period of time (for example, a unit of one day) may be given in advance. In such cases, the processing sequence of a plurality of orders can be changed as long as it is before the shipping deadline. For example, by appropriately rearranging the order processing sequence in advance, it may be possible to increase the ratio of picking products assigned to a plurality of orders from a single rack (simultaneous picking ratio) and improve the efficiency of rack transfer work and picking work. Conventionally, however, there has been no concern regarding a function such as rearranging the order processing sequence in order to improve the efficiency of the system as a whole.

Therefore, in the present arrangement, when a plurality of pieces of order data as information of unprocessed orders are given, the processing sequence of the orders is determined so as to improve the simultaneous picking ratio by referring to a plurality of pieces of rack data regarding a plurality of racks each housing one or more kinds of products. Since there is a one-to-one correspondence between the order data and the order, determining the processing sequence of the orders corresponds to determining the processing sequence of the order data. Similarly, processing for the orders can be rephrased as processing for the order data.

Rack data is data that includes a rack ID that is information identifying a rack, and identification information (first identification information) for one or more kinds of products that are currently housed on each rack as inventory. The rack data includes identification information indicating the kind of each product that makes up a set of products (product set) housed on the rack, for example.

Order data is data that includes an order ID that is information identifying an order, and identification information (second identification information) of one or more kinds of products to be picked from at least part of a plurality of racks. The order data represents, for example, a unit of shipping instruction for each product to be packed in a same housing container for a same destination.

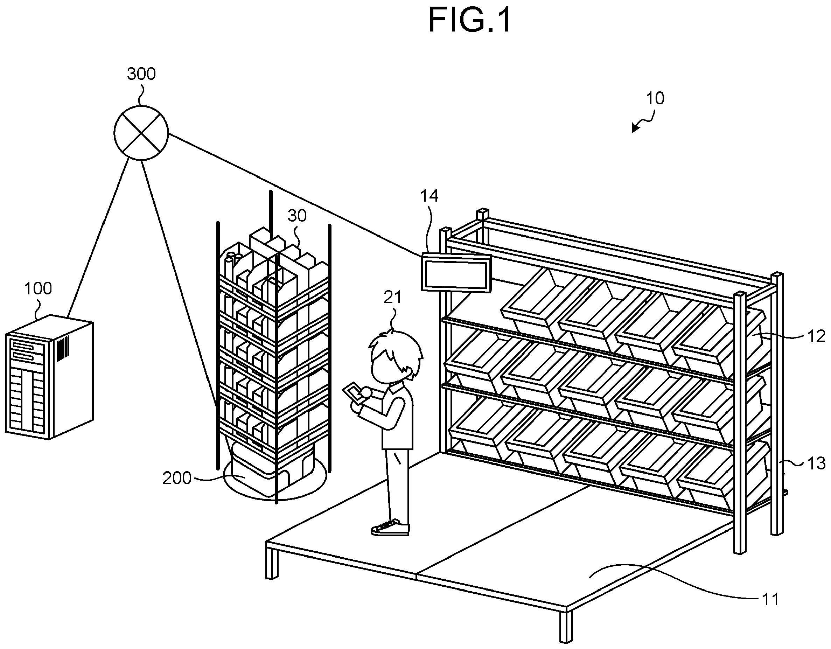

FIG. 1 is a diagram illustrating an overview of a configuration of an information processing system 10 (an example of the rack transfer system) according to the present arrangement. As illustrated in FIG. 1, the information processing system 10 includes an information processing device 100, a transfer device 200, a movable rack 30, a work station 11, a plurality of housing containers 12, a work rack 13, a display 14, and a network 300.

The work station 11 indicates the work place where picking is performed by a worker 21. While only one work station 11 is illustrated in FIG. 1, the information processing system 10 may include a plurality of work stations 11.

The rack 13 can accommodate a plurality of housing containers 12. The housing containers 12 each correspond to an order of a plurality of orders, for example. On the rack 13, the housing containers 12 each corresponding to an order of at least part of the plurality of pieces of order data are placed. The display 14 is a display device for displaying information such as work instructions output from the information processing device 100, for example.

The transfer device 200 is a device for moving (transferring) the rack 30 to the work station 11, which is an AGV, for example. As described, the rack 30 is movable to the work station 11. While only one rack 30 is illustrated in FIG. 1, a plurality of racks 30 are prepared in the information processing system 10, and the rack 30 selected according to the determined order processing sequence is moved to the work station 11. In a case of moving the rack by the worker 21, the transfer device 200 may not need to be provided. The rack 30 has a plurality of partitions, for example, and is capable of housing a plurality of kinds of products.

The network 300 is a network connecting the information processing device 100, the transfer device 200, and the display 14. The network 300 may be any form of network, including the Internet and a local area network (LAN). The network 300 may be a wireless network, a wired network, or a mixture of wireless and wired networks.

As illustrated in FIG. 1, the housing containers 12 for work corresponding to a plurality of orders are placed on the rack 13, and the worker 21 can perform picking for the orders in parallel. Note that picking may be performed by a picking robot or the like instead of the worker 21. Picking for each of the housing containers 12 is completed, when each of the products to be packed is placed thereinto. Completed orders (housing containers) are treated as completed and are sequentially removed from the work station 11, and the housing container 12 corresponding to the next order is put in.

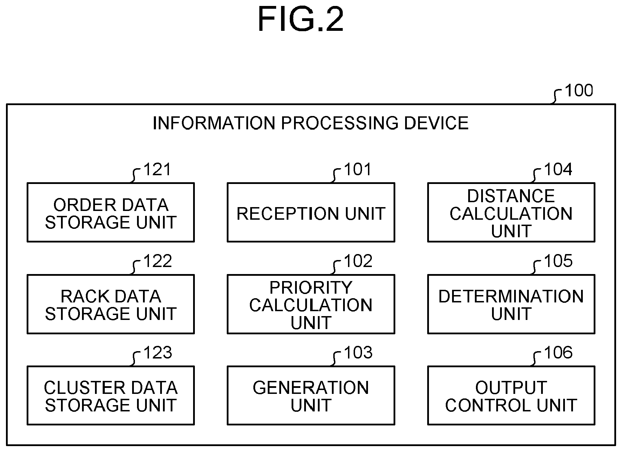

FIG. 2 is a block diagram illustrating an example of the configuration of the information processing device 100 according to the present arrangement. As illustrated in FIG. 1, the information processing device 100 includes a reception unit 101, a priority calculation unit 102, a generation unit 103, a distance calculation unit 104, a determination unit 105, an output control unit 106, an order data storage unit 121, a rack data storage unit 122, and a cluster data storage unit 123.

The reception unit 101 receives input of various kinds of data used in the information processing device 100. For example, the reception unit 101 receives a plurality of pieces of order data and a plurality of pieces of rack data to be processed. The order data and the rack data may be generated by any method, and may be generated by external systems such as a system that receives orders and a system that manages inventory of products, for example. While the method for inputting each data may be any method, it is possible to use a method that receives from an external system via the network 300, for example.

The order data includes at least an order ID and identification information of the products included in the order. The order IDs may be indicated as order O1, order O2, order O3, and so on, for example. The identification information of products may be indicated as product A, product B, product C, and so on, for example. Note that Information included in the order data is not limited thereto. For example, the order data may include the number and quantity of each product.

The rack data includes at least a rack ID and identification information of the products to be housed on the rack. The rack ID may be indicated as rack R1, rack R2, rack R3, and so on, for example. Note that Information included in the rack data is not limited thereto. For example, the rack data may include the number of pieces of each product and housing position information of the product regarding which side of the rack and in which partition the product is housed.

The reception unit 101 may receive data other than the order data and the rack data, such as product data including detailed information about each product (size, packing style, and the like), for example, as supplementary input data.

The priority calculation unit 102 calculates the priority for each of the racks. The priority is referred to when the generation unit 103 generates an index. The priority is calculated such that the value becomes larger for the rack where picking work can be performed more efficiently, for example. For example, the priority calculation unit 102 calculates the priority in two following methods. (M1) For a plurality of pieces of order data, the priority is calculated to have a larger value as the number of pieces housed products with identification information matching the identification information of the products included in the order data is greater.
(M2) The priority is calculated to have a larger value as the number of pieces of order data including identification information that matches the identification information of the products included in the rack data is greater.

Note that (M1) described above corresponds to a method that calculates, as the priority, the degree (coverage degree) regarding how much a set of products that have not assigned among the products included in each of the orders is covered (fulfilled) by a set of products (product set) housed in each of the racks. Although not limited thereto, the coverage degree is a value indicating the number of pieces of identification information that match the identification information of the products included in the order data, or a value indicating the ratio of the number, for example.

Note that (M2) described above corresponds to a method that calculates in advance a common priority for a plurality of pieces of order data. Details of each of such methods will be described later.

Based on the calculated priority of each rack, the generation unit 103 generates, for a plurality of pieces of order data, an index indicating one or more racks for picking the product among the racks that house the products of identification information that matches the identification information of the products included in the order data. For example, the generation unit 103 preferentially selects the rack with a priority higher than other racks as the rack to pick the product, and generates an index indicating the selected rack. The index is information that includes the rack ID of one or more racks where the product is to be picked, for example.

The distance calculation unit 104 calculates the distance between a plurality of indexes generated for each of the pieces of order data. Details of the distance calculation method will be described later.

Based on the rack data, the determination unit 105 determines the processing sequence of the pieces of order data such that the ratio of picking products assigned to the pieces of order data from one rack (for example, the ratio of simultaneous picking from one rack: simultaneous picking ratio) is increased. Note that "simultaneous" does not mean that the times are strictly coincident timewise, but means that picking from the same single rack is possible. The determination unit 105 determines the processing sequence of the pieces of order data such that sequence numbers become closer as the calculated distance is smaller. The determination unit 105 executes hierarchical (agglomerative) clustering that generates clusters represented by a hierarchical structure by repeating the processing of merging the orders corresponding to the indexes with small distances into a cluster, for example. The determination unit 105 then determines the processing sequence of the orders such that the orders in the same cluster are placed in close sequence numbers from each other.

As for the hierarchical clustering, the processing of finding a pair of two clusters with the smallest distance between the indexes assigned to the clusters and merging them into one cluster is iterated until all pieces of order data are merged into one cluster. This allows clustering of the pieces of order data such that the orders with the close distance between the corresponding indexes are included in the same cluster.

The determination unit 105 stores a binary tree with clusters (or orders) before being merged as child nodes (child clusters) and the cluster after being merged as a parent node (parent cluster) in the cluster data storage unit 123 as a clustering history. The determination unit 105 also stores clusters in a hierarchical structure representing the result of current clustering in the cluster data storage unit 123. When all pieces of order data are merged into a single cluster, a hierarchical cluster representing the final processing result is stored in the cluster data storage unit 123. By recursively expanding the above binary tree such that child clusters belonging to the same parent cluster are adjacent to each other, the determination unit 105 determines the processing sequence of the orders such that the leaves (corresponding to the order data) of the binary tree belonging to the same parent cluster are arranged in close sequence numbers.

The output control unit 106 controls the output of various kinds of information processed by the information processing device 100. For example, the output control unit 106 outputs information indicating the determined processing sequence of the orders (sequence information). The sequence information is referred to when allocating the orders to one or more work stations 11, for example.

When a plurality of work stations 11 are provided, the output control unit 106 may output a set of order data (a data group) to be allocated to each of the work stations 11. For example, the output control unit 106 outputs a plurality of data groups that are assigned to each of the work stations 11. The output control unit 106 divides a list of orders arranged in the processing sequence determined by the determination unit 105 such that the estimated amount of workload at each station is leveled, and outputs each of those. For example, there may be methods such as dividing the orders such that number of orders becomes equivalent, dividing the orders such that the total number of products in the orders becomes equivalent, and the like.

The output control unit 106 may output instructions regarding the sequence of calling the racks 30 to the station and instructions for picking work based on the determined processing sequence of the orders and the information in the indexes. The output control unit 106 may output a work instruction regarding the moved crack 30 to the display 14.

Each of the above units (the reception unit 101, the priority calculation unit 102, the generation unit 103, the distance calculation unit 104, the determination unit 105, and the output control unit 106) is achieved by a single or a plurality of processors, for example. For example, each of the above units may be achieved by having a processor such as a central processing unit (CPU) execute a program, that is, by software. Each of the above units may be achieved by a dedicated integrated circuit (IC), that is, hardware. Each of the above units may be achieved by using a combination of software and hardware. When using a plurality of processors, each of the processors may achieve one of the units or may achieve two or more of the units.

The order data storage unit 121 stores the order data received by the reception unit 101. The rack data storage unit 122 stores the rack data received by the reception unit 101. The cluster data storage unit 123 stores data (binary trees as history, hierarchical clusters, and the like) generated by the hierarchical clustering performed by the determination unit 105.

Each of the storage units (the order data storage unit 121, the rack data storage unit 122, and the cluster data storage unit 123) may be configured with any commonly used storage media such as a flash memory, a memory card, a Random Access Memory (RAM), a Hard Disk Drive (HDD), and an optical disk.

Each of the storage units may be a physically different storage medium or may be achieved as a different memory area of a physically same storage medium. Furthermore, each of the storage units may be achieved by a plurality of physically different storage media.

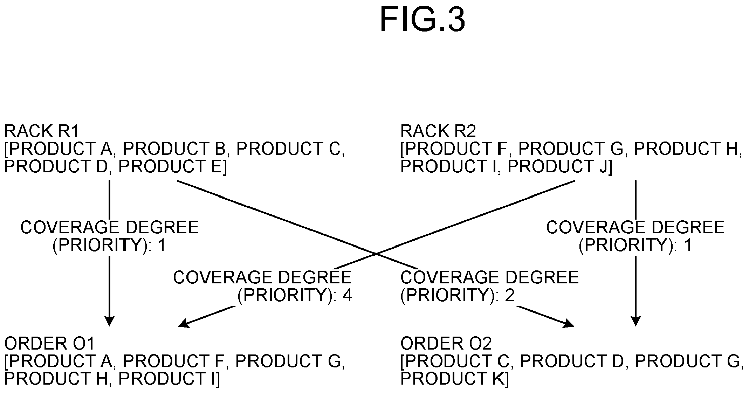

Next, details of the priority calculation methods will be described. First, an example of priority calculation by the method (M1) will be described. FIG. 3 is a diagram illustrating an example of priority calculation.

In the example of FIG. 3, the rack with rack ID of rack R1 houses the product A, the product B, the product C, the product D, and the product E, and the rack with rack ID of rack R2 houses the product F, the product G, the product H, the product I, and the product J. Furthermore, the order with order ID of order O1 includes the product A, the product F, the product G, the product H, and the product I, and the order with order ID of order O2 includes the product C, the product D, the product G, and the product K.

The priority calculation unit 102 calculates the priority of each of the candidate racks (two racks in this case) for the order data with the order ID of order O1, for example. For example, only the product A is the match between the product A, the product B, the product C, the product D, and the product E housed on the rack with rack ID of rack R1 and the product A, the product F, the product G, the product H, and the product I included in the order indicated as order O1. Therefore, the priority calculation unit 102 calculates "1" as the coverage degree (priority). Similarly, the coverage degree (priority) of each rack for each order is calculated as follows.
- Coverage degree of the rack with rack ID of rack R2 for the order indicated as order O1: 4
- Coverage degree of the rack with rack ID of rack R1 for the order indicated as order O2: 2
- Coverage degree of the rack with rack ID of rack R2 for the order indicated as order O2: 1

Note that the priority calculation unit 102 may not need to calculate the coverage degree for the rack not housing the products included in the order.

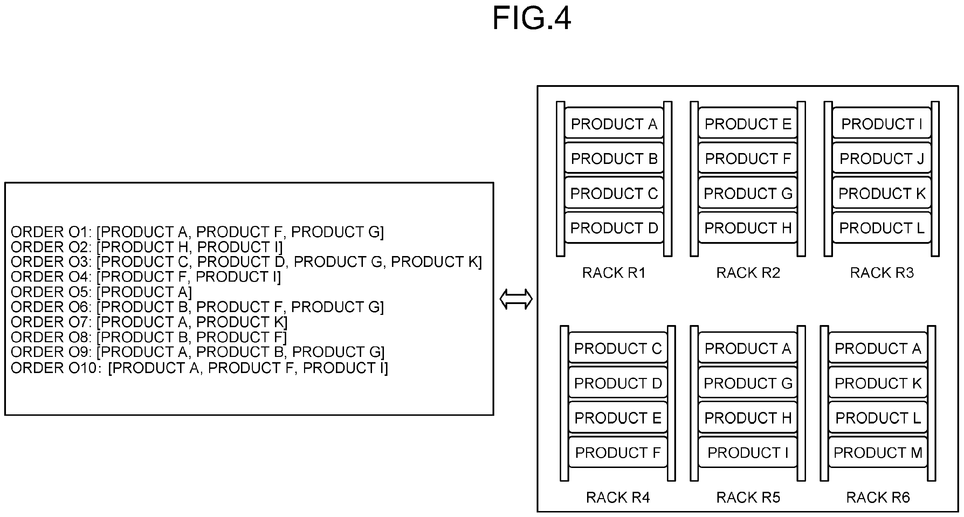

Next, an example of priority calculation by the method (M2) will be described. FIG. 4 is a diagram illustrating an example of priority calculation.

In the example of FIG. 4, ten orders with order IDs of order O1 to order O10 and six pieces of rack data with rack IDs of rack R1 to rack R6 are used. Each of the orders includes the products of the identification information listed next to the order ID. Each of the racks houses the products of the identification information listed above the rack ID.

For each product included in any of the orders, the priority calculation unit 102 first counts how many orders each product is included in. In the example of FIG. 4, the product A is included in five orders (order IDs thereof are order O1, order O5, order O7, order O9, and order O10). In the same manner, the count values representing the number of orders including each product are calculated as follows.
- Product A: 5
- Product B: 3
- Product C: 1
- Product D: 1
- Product F: 5
- Product G: 4
- Product H: 1
- Product I: 3
- Product K: 2

Next, the priority calculation unit 102 calculates, as the priority, the sum of the count values for the products to be housed on each of the racks. For example, the priority for the rack indicated as rack R1 is "5 + 3 + 1 + 1 = 10". Similarly, the priority of each of the racks is calculated as follows.
- Rack R1 10
- Rack R2: 10
- Rack R3: 5
- Rack R4: 7
- Rack R5: 13
- Rack R6: 7

Next, details of an index generation method will be described. For each of the orders, the generation unit 103 preferentially selects the rack that can be assigned, that is, the rack with the highest priority among the candidate racks that house the products included in the order, as the candidate rack for picking, and generates an index that includes the selected rack. The generation unit 103 repeats the processing until the rack for picking is assigned for all the products included in the order.

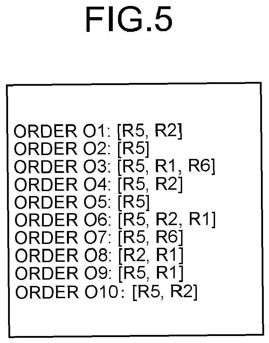

FIG. 5 is a diagram illustrating an example of the index to be generated. FIG. 5 illustrates an example of the index generated based on the priority by the method (M2) for the example of FIG. 4.

For each product in each order, the generation unit 103 iterates to select the rack with the highest priority among the candidate racks to which the product can be assigned, and to associate (assign) the selected rack to the order, until all products in the order are covered. For example, for the product A in the order O1, the generation unit 103 selects the rack indicated as rack R5 having the highest priority among the racks with rack IDs R1, R5, and R6 where the product A can be assigned, and associates it with the order O1. The generation unit 103 generates the index by including the rack ID of the associated rack.

In this example, the rack indicated as rack R5 also includes the product G, so that the product G is simultaneously assigned for the order O1. For the product F that has not yet been assigned, the generation unit 103 selects the rack indicated as rack R2 having the highest priority among the racks indicated as R2 and R4 where the product F can be assigned, and associates it with the order indicated as order O1. The generation unit 103 generates the index including R5 and R2 as illustrated in FIG. 5 as the index that includes the rack ID of the associated rack.

The generation unit 103 iterates such processing for all orders. FIG. 5 illustrates examples of the index generated for the order of the corresponding ID next to each order ID.

The generation unit 103 may generate the index to which a weight for each rack is given. The weight is the number of pieces of identification information of the products assigned to the rack among the products included in the target order, for example. For example, as for the order O1 in FIG. 5, the rack indicated as rack R5 has a weight "2" because the product A and the product G are assigned, and the rack indicated as rack R2 has a weight "1" because the product F is assigned. The weight calculation method is not limited thereto and, for example, a method using the priority as it is as the weight may be used as well.

The generated indexes are the information used for hierarchical clustering performed by the determination unit 105. Therefore, the racks included in the index does not need to be used as the racks to be the actual assigned targets.

For example, in secondary processing after the sequence determination processing performed by the information processing device 100, when there are a plurality of candidate racks that can be assigned to the same product as in the example of FIG. 4 (in a case where the same kind of products are housed in a dispersed manner), the rack to be assigned for each of the orders may be changed.

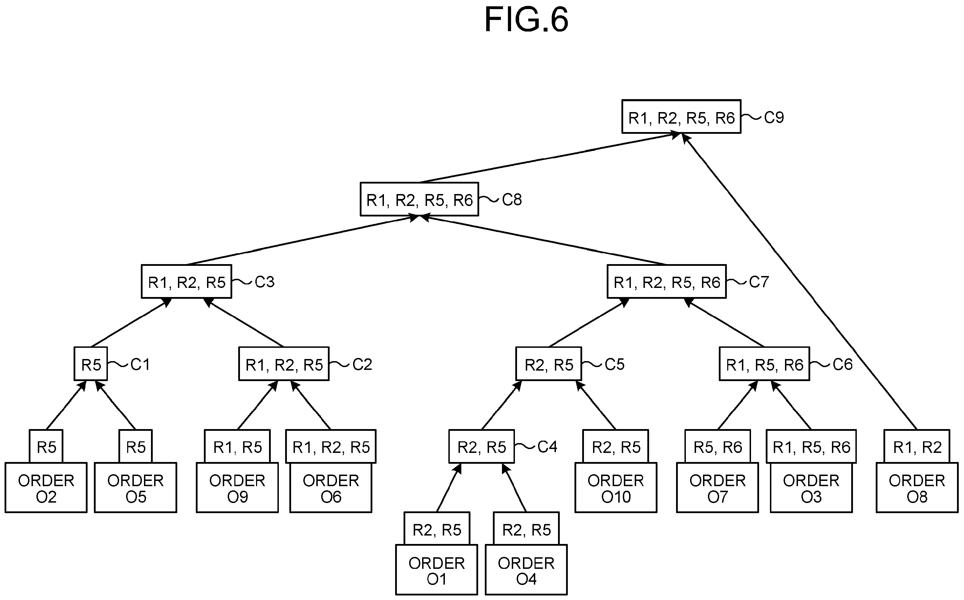

Next, an example of hierarchical clustering using indexes will be described. FIG. 6 is a diagram illustrating an example of hierarchical clusters to be generated by hierarchical clustering.

First, the distance calculation unit 104 calculates the distance between a plurality of generated indexes. The distance calculation unit 104 calculates, as the distance, the total number of unmatched racks (rack IDs) between two indexes, for example. Not limited thereto, the distance may be calculated by following methods, for example, and there is no limit set for the calculation method.
- The distance is defined as the value acquired by multiplying the total number of matching racks by a negative coefficient.
- The distance is the value of the sum of the total number of unmatched racks and the total number of matched racks, each multiplied by a coefficient.
- When the index is weighted for each rack, the sum total of the weights (may be weights multiplied by a negative coefficient) may be used as the distance for each matching rack. For example, when the weight of the rack R5 included in the index of the order O1 in FIG. 5 is "2" and the weight of the rack R2 is "1", the distance calculation unit 104 calculates the distance as "-2" when only the rack R5 matches, the distance as "-1" when only the rack R2 matches, and the distance as "-3" when the rack R5 and the rack R2 both match.

Next, the determination unit 105 generates clusters in a hierarchical structure by repeating the processing of merging the orders with the indexes of a small distance into one cluster, or clusters into one cluster, or an order and a cluster into one cluster. In FIG. 5, the indexes of the orders indicated as order O2 and order O5 match in respect that those indexes include only R5, for example. When using distances that have smaller values for the indexes including only the matching rack IDs, the determination unit 105 merges the orders indicated as order O2 and order O5 into a single cluster.

Cluster C1 in FIG. 6 indicates the cluster merged in this manner. Note that C1 to C9 represent information that identifies each cluster. The determination unit 105 stores a binary tree with the two clusters before being merged as child nodes and the cluster after being merged as a parent node in the cluster data storage unit 123. In a similar manner, the determination unit 105 iterates the processing until all orders are merged into a single cluster.

FIG. 6 illustrates an example of a single integrated cluster. As illustrated in FIG. 6, as the index for the merged cluster, the union of the rack IDs assigned to each order belonging to the cluster is used, for example.

By recursively expanding the binary tree such that the child clusters belonging to the same parent cluster are adjacent to each other, the determination unit 105 determines the processing sequence of the orders such that the two orders corresponding to leaf nodes belonging to the same cluster are arranged in close sequence numbers.

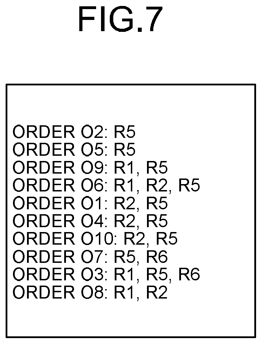

FIG. 7 is a diagram illustrating an example of orders rearranged according to the determined processing sequence. FIG. 7 is an example of orders rearranged based on the clusters illustrated in FIG. 6. As illustrated in FIG. 6, the cluster includes ten leaf nodes corresponding to ten orders. The determination unit 105 determines the processing sequence of the orders by recursively following the parent-child relationship of the binary tree (expanding the binary tree) from the cluster C9 discovered at last, for example. In the example of FIG. 6, the determination unit 105 rearranges the orders according to the sequence of FIG. 7 by following the parent-child relationship in a manner as follows and arranging the reached leaves (orders).

C9 → C8 → C3 → C1 → order O2 → C1 → order O5 → C1 → C3 → C2 → order O9 → C2 → order O6 → C2 → C3 → C8 → C7 → C5 → C4 → order O1 → (omitted) → C8 → C9 → order O8

As described above, the output control unit 106 may output data groups of order data to be assigned to each of the work stations 11. For example, when there are N-pieces of work stations 11 (N is an integer of 2 or larger), the output control unit 106 divides the order data into N-pieces of data groups such that the estimated workload of each of the work stations 11 is leveled. The output control unit 106 can use the following dividing methods.
- Divide the order data such that the number of orders becomes equivalent.
- Perform division such that the total number of products included in the orders becomes equivalent.
- Perform division such that the total number of racks used in the orders (the size of the union of rack IDs included in the indexes) becomes equivalent.

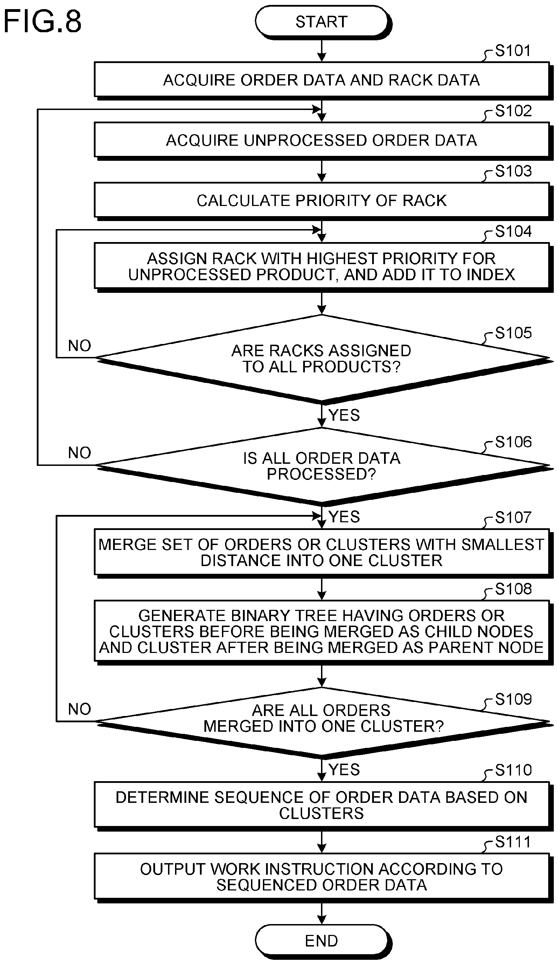

Next, the sequence determination processing performed by the information processing device 100 according to the present arrangement will be described. FIG. 8 is a flowchart illustrating an example of the sequence determination processing according to the present arrangement.

The reception unit 101 receives input of a plurality of pieces of order data and a plurality of pieces of rack data (step S101). At subsequent steps S102 to S106, the processing of generating the index by associating the rack for each of the orders is repeatedly executed for all orders.

First, the priority calculation unit 102 acquires the order data for which the index is not generated (unprocessed) among the received order data (step S102). The priority calculation unit 102 calculates the priority of the racks by (M1) or (M2) described above, for example (step S103). In the case of (M2), the priority calculation unit 102 first determines the priority of each of the racks at step S101.

For the product to which the rack is not assigned (unprocessed), the generation unit 103 associates the rack of highest priority and generates an index to which the rack ID of the associated rack is added (step S104). The generation unit 103 determines whether the racks are associated for all products included in the order data (step S105). When the racks are not associated for all products (No at step S105), the processing returns to step S104 and is repeated therefrom for the next unprocessed product.

When the racks are associated for all products (Yes at step S105), the generation unit 103 determines whether all pieces of order data are processed (step S106). When all pieces of order data are not processed (No at step S106), the processing returns to step S102 and is repeated therefrom for the next unprocessed product.

When all pieces of order data are processed (Yes at step S106), hierarchical clustering is performed at subsequent steps S107 to S109.

The determination unit 105 merges a pair of orders or clusters with the smallest distance into a single cluster (step S107). Note that the distance between the indexes is calculated by the distance calculation unit 104. The determination unit 105 generates a binary tree with an order or a cluster before being merged as a child node and a cluster after being merged as a parent node, and stores it in the cluster data storage unit 123 (step S108).

The determination unit 105 determines whether all orders are merged into a single cluster (step S109). When all orders are not merged into a single cluster (No at step S109), the processing returns to step S107 and is repeated therefrom.

When all orders are merged into a single cluster (Yes at step S109), the determination unit 105 determines the sequence of the order data based on the generated clusters (step S110).

The output control unit 106 outputs a work instruction based on the order data for which the sequence is determined (step Sill). When there are a plurality of work stations, the output control unit 106 divides the list of a plurality of pieces of sequenced order data into a plurality of data groups, and outputs the data groups as information indicating the orders to be processed by each of the work stations 11.

As described, in the present arrangement, by using a plurality of pieces of order data and a plurality of pieces of rack data acquired in advance, it is possible to determine the processing sequence of the pieces of order data to be able to execute picking work more efficiently.

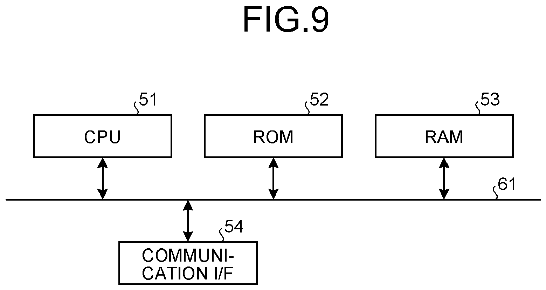

Next, the hardware configuration of the information processing device according to the present arrangement will be described by referring to FIG. 9. FIG. 9 is a diagram illustrating an example of the hardware configuration of the information processing device according to the present arrangement.

The information processing device according to the present arrangement includes a control device such as a CPU 51, memory devices such as a Read Only Memory (ROM) 52 and a RAM 53, a communication I/F 54 that is connected to a network for performing communication, and a bus 61 that connects each of the units.

The computer program to be executed by the information processing device according to the present arrangement is provided by being loaded in advance in the ROM 52 or the like.

The computer program to be executed by the information processing device according to the present arrangement may be recorded in an installable or executable format file on a computer readable recording medium such as a Compact Disk Read Only Memory (CD-ROM), a flexible disk (FD), a Compact Disk Recordable (CD-R), a Digital Versatile Disk (DVD), or the like, and may be provided as a computer program product.

Furthermore, the computer program to be executed by the information processing device according to the present arrangement may be stored on a computer connected to a network such as the Internet and may be provided by being downloaded via the network. The computer program executed by the information processing device according to the present arrangement may be provided or distributed via a network such as the Internet.

The computer program executed by the information processing device according to the present arrangement may cause the computer to function as each of the units of the information processing device described above. As for the computer, the CPU 51 can read the computer program from a computer-readable storage medium and execute it on the main memory.

While certain arrangements have been described, these arrangements have been presented by way of example only, and are not intended to limit the scope of the claims. Indeed, the apparatuses described herein may be embodied in a variety of other forms; furthermore various omissions, substitutions and changes in the form of the apparatuses described herein may be made.
Example 1. An information processing device includes a reception unit and a determination unit. The reception unit receives a plurality of pieces of rack data including first identification information of one or more kinds of products to be housed in a plurality of racks, and a plurality of pieces of order data including second identification information of one or more kinds of products to be picked from at least part of the plurality of racks. The determination unit, based on the rack data, determines a processing sequence of the plurality of pieces of order data such that a ratio of picking products assigned to pieces of the order data from a single rack is increased. The plurality of racks are able to be moved to a work station where housing containers corresponding to at least part of the plurality of pieces of order data are disposed.
Example 2. The information processing device according to Example 1, further includes a generation unit that, based on priorities calculated for the plurality of racks, generates indexes indicating one or more racks for picking products of the first identification information that matches the second information among racks housing the products, for each of the plurality of pieces of order data. The determination unit determines the processing sequence using the indexes.
Example 3. The information processing device according to Example 2, further includes a distance calculation unit that calculates distances between the indexes generated for the plurality of pieces of order data. The determination unit determines the processing sequence such that sequence numbers are closer as the distance is smaller.
Example 4. In the information processing device according to Example 3, the determination unit determines the processing sequence by executing hierarchical clustering that repeats processing of merging the order data corresponding to the indexes with the small distance into a cluster and performing recursive expansion such that child clusters having a common parent cluster are adjacent to each other.
Example 5. In the information processing device according to Example 2, the generation unit preferentially selects a rack with the priority higher than other racks as a rack to pick a product, and generates the index indicating the selected rack.
Example 6. The information processing device according to Example 2, further includes a priority calculation unit that calculates, for each of the plurality of pieces of order data, the priority smaller as a number of pieces of the first identification information that matches the second identification information included in the order data is greater.
Example 7. The information processing device according to Example 2, further includes a priority calculation unit that calculates the priority higher as a number of pieces of the order data including the second identification information that matches the first identification information is greater.
Example 8. The information processing device according to Example 1, further includes an output control unit that divides the plurality of pieces of order data into a plurality of data groups each including the order data close to each other in the determined processing sequence, and outputs the plurality of data groups as data groups to be allocated to a plurality of work stations where picking is performed.
Example 9. In the information processing device according to Example 1, the determination unit determines, based on the rack data, the processing sequence such that a ratio of simultaneously picking products assigned to the pieces of order data from the single rack is increased.
Example 10. An information processing method is executed by an information processing device. The information processing method includes: receiving a plurality of pieces of rack data including first identification information of one or more kinds of products to be housed in a plurality of racks, and a plurality of pieces of order data including second identification information of one or more kinds of products to be picked from at least part of the plurality of racks; and based on the rack data, determining a processing sequence of the plurality of pieces of order data such that a ratio of picking products assigned to pieces of the order data from a single rack is increased. The plurality of racks are able to be moved to a work station where housing containers corresponding to at least part of the plurality of pieces of order data are disposed.
Example 11. A computer-readable medium includes programmed instructions. The instructions causes a computer to execute: receiving a plurality of pieces of rack data including first identification information of one or more kinds of products to be housed in each of a plurality of racks, and a plurality of pieces of order data including second identification information of one or more kinds of products to be picked from at least part of the plurality of racks; and based on the rack data, determining a processing sequence of the plurality of pieces of order data such that a ratio of picking products assigned to pieces of the order data from a single rack is increased. The plurality of racks are able to be moved to a work station where housing containers corresponding to at least part of the plurality of pieces of order data are disposed.
Example 12. An information processing system includes a transfer device and an information processing device. The transfer device transfers a plurality of racks housing products. The information processing device includes a reception unit and a determination unit. The reception unit receives a plurality of pieces of rack data including first identification information of one or more kinds of products to be housed in the plurality of racks, and a plurality of pieces of order data including second identification information of one or more kinds of products to be picked from at least part of the plurality of racks. The determination unit, based on the rack data, determines a processing sequence of the plurality of pieces of order data such that a ratio of picking products assigned to pieces of the order data from a single rack is increased. The plurality of racks are able to be moved to a work station where housing containers corresponding to at least part of the plurality of pieces of order data are disposed.

## Claims

1. An information processing device (100) comprising:
a reception unit (101) that receives a plurality of pieces of rack data including first identification information of one or more kinds of products to be housed in a plurality of racks (30), and a plurality of pieces of order data including second identification information of one or more kinds of products to be picked from at least part of the plurality of racks (30); and
a determination unit (105) that, based on the rack data, determines a processing sequence of the plurality of pieces of order data such that a ratio of picking products assigned to pieces of the order data from a single rack (30) is increased, wherein
the plurality of racks (30) are able to be moved to a work station (11) where housing containers (12) corresponding to at least part of the plurality of pieces of order data are disposed.

2. The information processing device (100) according to claim 1, further comprising a generation unit (103) that, based on priorities calculated for the plurality of racks (30), generates indexes indicating one or more racks (30) for picking products of the first identification information that matches the second information among racks (30) housing the products, for each of the plurality of pieces of order data, wherein
the determination unit (105) determines the processing sequence using the indexes.

3. The information processing device (100) according to claim 2, further comprising a distance calculation unit (104) that calculates distances between the indexes generated for the plurality of pieces of order data, wherein
the determination unit (105) determines the processing sequence such that sequence numbers are closer as the distance is smaller.

4. The information processing device (100) according to claim 3, wherein the determination unit (105) determines the processing sequence by executing hierarchical clustering that repeats processing of merging the order data corresponding to the indexes with the small distance into a cluster and performing recursive expansion such that child clusters having a common parent cluster are adjacent to each other.

5. The information processing device (100) according to claim 2, wherein the generation unit (103) preferentially selects a rack (30) with the priority higher than other racks (30) as a rack (30) to pick a product, and generates the index indicating the selected rack (30).

6. The information processing device (100) according to claim 2, further comprising a priority calculation unit (102) that calculates, for each of the plurality of pieces of order data, the priority smaller as a number of pieces of the first identification information that matches the second identification information included in the order data is greater.

7. The information processing device (100) according to claim 2, further comprising a priority calculation unit (102) that calculates the priority higher as a number of pieces of the order data including the second identification information that matches the first identification information is greater.

8. The information processing device (100) according to claim 1, further comprising an output control unit (106) that divides the plurality of pieces of order data into a plurality of data groups each including the order data close to each other in the determined processing sequence, and outputs the plurality of data groups as data groups to be allocated to a plurality of work stations (11) where picking is performed.

9. The information processing device (100) according to claim 1, wherein the determination unit (105) determines, based on the rack data, the processing sequence such that a ratio of simultaneously picking products assigned to the pieces of order data from the single rack (30) is increased.

10. An information processing method executed by an information processing device (100), the information processing method comprising:
receiving a plurality of pieces of rack data including first identification information of one or more kinds of products to be housed in a plurality of racks (30), and a plurality of pieces of order data including second identification information of one or more kinds of products to be picked from at least part of the plurality of racks (30); and
based on the rack data, determining a processing sequence of the plurality of pieces of order data such that a ratio of picking products assigned to pieces of the order data from a single rack (30) is increased, wherein
the plurality of racks (30) are able to be moved to a work station (11) where housing containers (12) corresponding to at least part of the plurality of pieces of order data are disposed.

11. A computer-readable medium including programmed instructions, the instructions causing a computer to execute:
receiving a plurality of pieces of rack data including first identification information of one or more kinds of products to be housed in each of a plurality of racks (30), and a plurality of pieces of order data including second identification information of one or more kinds of products to be picked from at least part of the plurality of racks (30); and
based on the rack data, determining a processing sequence of the plurality of pieces of order data such that a ratio of picking products assigned to pieces of the order data from a single rack (30) is increased, wherein
the plurality of racks (30) are able to be moved to a work station (11) where housing containers (12) corresponding to at least part of the plurality of pieces of order data are disposed.

12. An information processing system comprising:
a transfer device (200); and
an information processing device (100), wherein
the transfer device (200) transfers a plurality of racks (30) housing products, and
the information processing device (100) comprises:
a reception unit (101) that receives a plurality of pieces of rack data including first identification information of one or more kinds of products to be housed in the plurality of racks (30), and a plurality of pieces of order data including second identification information of one or more kinds of products to be picked from at least part of the plurality of racks (30); and
a determination unit (105) that, based on the rack data, determines a processing sequence of the plurality of pieces of order data such that a ratio of picking products assigned to pieces of the order data from a single rack (30) is increased, wherein
the plurality of racks (30) are able to be moved to a work station (11) where housing containers (12) corresponding to at least part of the plurality of pieces of order data are disposed.
